# EUROPEAN PATENT APPLICATION

(11) **EP 1 493 473 A1**
(43) Date of publication of application: **05.01.2005**
(21) Application number: 04015648.1
(22) Date of filing: 02.07.2004
(51) Int. Cl.: A63F 13/12

(54) **Game providing system and game server**

(30) Priority: 04.07.2003 JP 2003271136; 04.07.2003 JP 2003271138
(71) Applicant: Aruze Corp., Tokyo (JP)
(72) Inventor: Nara, Toshiomi, Tokyo (JP)
(74) Representative: HOFFMANN - EITLE

(57) **Abstract**

The present invention provides a game providing system which can expect that a registered player prolongs or extends his or her contract period and can enhance an access ratio of the registered player to a game site. A game providing system includes a portable terminal (10) and a game server which are connected to each other via the Internet and allowing the game server to give points which are exchangeable with a predetermined commodity or service to a member who gains access to the game server from the portable terminal (10) and plays a game on a game site, wherein the game server has means which changes the points in accordance with attributes of the member.

## Description

### CROSS-REFERENCES TO THE RELATED APPLICATIONS

This application is based upon and claims the priority from a prior Japanese patent applications No. 2003-271136 and No. 2003-271138, filed on July 4, 2003, in Japan, entire contents of which are incorporated herein by reference.

This application is related to co-pending U.S. patent applications referred to as prior Japanese patent applications Nos. 2003-192398, 2003-192399, 2003-192404, 2003-271140, 2003-271141, 2003-192406, filed in the United States on the even date herewith.

### BACKGROUND OF THE INVENTION

### 1. FIELD OF THE INVENTION:

The present invention relates to a game providing system and a game server which are constituted such that a registered member can enjoy games at a game site from his or her portable terminal such as personal digital assistance (PDA) via the Internet.

### 2. RELATED ART:

There has been generally known a game providing system which is constituted such that a registered member can enjoy games at a game site from his or her portable terminal via the Internet. As this type of game providing system, there has been known a system which gives points to the member and the member can receive special benefits according to the points that he or she gains (see Japanese Laid-Open Patent Publication 2002-219281, for example).

Here, in the above-mentioned conventional game providing system, the system merely gives the points by which the member can simply receive the predetermined benefits and hence, there has been observed a tendency that when the member becomes bored with the game, the member gradually decreases the number of accesses or visits to the game site. In view of such a circumstance, the conventional game providing system has drawbacks that the contract period of the member cannot be prolonged and the access ratio to the game site is gradually lowered.

### SUMMARY OF THE INVENTION

Accordingly, it is an object of the present invention to provide a game providing system and a game server which can expect the prolongation or the extension of the contract period of a member and can increase the access ratio of a member to a game site.

To achieve the above-mentioned object, the present invention provides the following.
(1) According to the first aspect of the present invention, there is provided a game providing system which comprises a portable terminal and a game server connected with the portable terminal via the Internet, the game server capable of giving points which are exchangeable with a predetermined commodity or service to a registered member who gains access to the game server to play a game on a game site from the portable terminal via the Internet in accordance with attributes of the member.
   According to the game providing system of the present invention, since the points predetermined to the member are changed in accordance with the attributes of the member, he or she gains access to the game site expecting the change of points in accordance with his or her attributes whereby the tendency that the member renews a contract period is strengthened or his or her access ratio to the game site is enhanced.
   The present invention further provides the following.
(2) A game providing system described in the above-mentioned (1), wherein the attribute is a contract period length of the member.
   In the game providing system according to the present invention, since additional bonus points which are predetermined to the member for every period are increased corresponding to the length of the contract period of the member, the longer the contract period, the tendency that the member renews the contract period is strengthened expecting that the larger additional bonus points are predetermined to the member for every period.
   In the game providing system according to the present invention, it is preferable that the predetermined period for giving the additional bonus points is set to a period of not longer than one year, for example, six months or three months. It is further preferable that the predetermined period for giving the additional bonus points is set to one month.
   Further, the present invention provides the following.
(3) In the game providing system described in the above-mentioned (1), the attribute is member's achievement in the game.
   In the game providing system according to the present invention, the ranking points which are predetermined to the member who plays a specified game within the predetermined period are increased in accordance with a rank which is determined based on cumulative game achievements of members and hence, the competitive spirit of each member against other members is fanned and, at the same time, the higher the rank of the member becomes, he or she gains access to the game site more often expecting that the more ranking points are predetermined to the member whereby an access ratio to the game site is enhanced.
(4) According to the second aspect of the present invention, there is provided a game server which is capable of giving points which are exchangeable with a predetermined commodity or service to a registered member who gains access to the game server to play a game on a game site from a portable terminal via the Internet in accordance with attributes of the member.
   According to the game server of the present invention, since the points predetermined to the member are changed in accordance with the attributes of the member, he or she gains access to the game site expecting the change of points in accordance with his or her attributes whereby the tendency that the member renews a contract period is strengthened or his or her access ratio to the game site is enhanced.
   The present invention further provides the following.
(5) A game server described in the above-mentioned (4), wherein the attribute is a contract period length of the member.
   In the game server according to the present invention, since additional bonus points which are predetermined to the member for every period are increased corresponding to the length of the contract period of the member, the longer the contract period, the tendency that the member renews the contract period is strengthened expecting that the larger additional bonus points are predetermined to the member for every period.
   Also in the game server according to the present invention, it is preferable that the predetermined period for giving the additional bonus points is set to a period of not longer than one year, for example, six months or three months. It is further preferable that the predetermined period for giving the additional bonus points is set to one month.
   Further, the present invention provides the following.
(6) In the game server described in the above-mentioned (4), the attribute is member's achievement in the game.

In the game server according to the present invention, the ranking points which are predetermined to the member who plays a specified game within the predetermined period are increased in accordance with a rank which is determined based on cumulative game achievements of members and hence, the competitive spirit of each member against other members is agitated and, at the same time, the higher the rank of the member, the more often he or she gains access to the game site expecting that more ranking points will be predetermined to the member whereby an access ratio to the game site is enhanced.

According to the game providing system and the game server of the present invention, since additional bonus points which are predetermined to the member for every period are increased corresponding to the length of the contract period of the member, the longer the contract period, the tendency that the member renews the contract period is strengthened expecting that the larger additional bonus points are predetermined to the member for every period. Accordingly, it is possible to expect that the contract period of the member can be prolonged.

Further, the ranking points which are predetermined to the member who plays a specified game within the predetermined period are increased in accordance with a rank which is determined based on cumulative game achievements of members and hence, the competitive spirit of each member against other members is agitated and, at the same time, the higher the rank of the member, the more often he or she gains access to the game site expecting that more ranking points will be predetermined to the member. In this manner, according to the present invention, an access ratio to the game site is enhanced.

### BRIEF DESCRIPTION OF THE DRAWINGS

Fig. 1 is a schematic view of a game providing system according to the present invention;
Fig. 2 is a block diagram showing the constitution of the game server shown in Fig. 1;
Fig. 3 is a view showing data items of a member master shown in Fig. 2;
Fig. 4 is a view showing data items of a point master shown in Fig. 2;
Fig. 5 is a view showing an additional bonus point table stored in a ROM shown in Fig. 2;
Fig. 6 is a flow chart showing processing steps of the game server shown in Fig. 2;
Fig. 7 is a block diagram showing the constitution of the game server shown in Fig. 1;
Fig. 8 is a view showing data items of a member master shown in Fig. 7;
Fig. 9 is a view showing data items of a game achievement master shown in Fig. 7;
Fig. 10 is a view showing a ranking point table stored in a ROM shown in Fig. 7;
Fig. 11 is a flow chart showing processing steps of the game server shown in Fig. 7;
Fig. 12 is a flow chart showing a subroutine of step S106 shown in Fig. 11;
Fig. 13 is a flow chart showing a subroutine of step S108 shown in Fig. 11; and
Fig. 14 is a view showing contents of ranking file prepared in step S183 shown in Fig. 13.

### DESCRIPTION OF THE PREFERRED EMBODIMENTS

### [First embodiment]

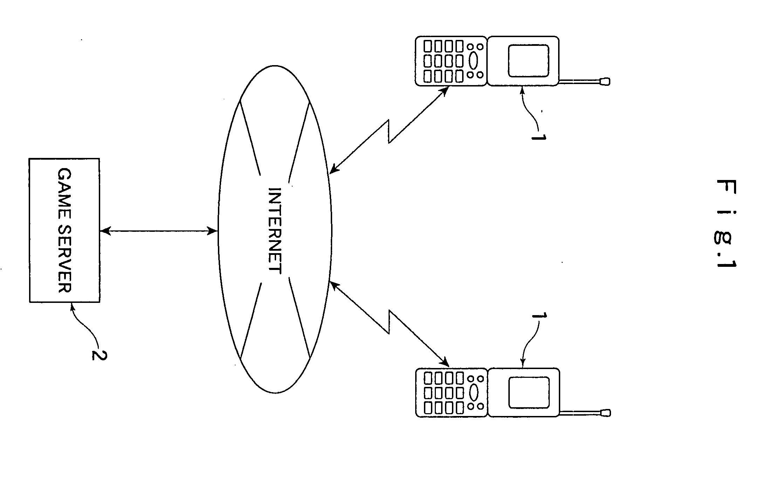

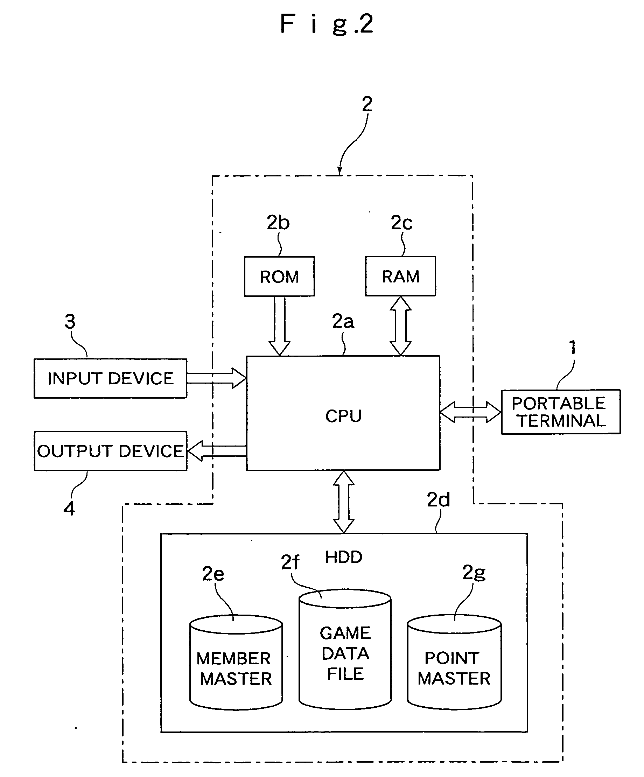

The first embodiment of a game providing system and a game server of the present invention is explained in conjunction with drawings. In the referenced drawings, Fig. 1 is a schematic view of the game providing system according to the first embodiment and Fig. 2 is a block diagram showing the constitution of the game server shown in Fig. 1.

The game providing system according to the first embodiment includes, as shown in Fig. 1, portable terminals 1 such as i-mode (registered trademark) mobile phones and a game server 2 to which the portable terminals 1 are connected via the Internet. The game server 2 includes, as shown in Fig. 2, a CPU (Central Processing Unit) 2a, a ROM (Read Only Memory) 2b, a RAM (Random Access Memory) 2c, an HDD (Hard Disk) 2d and the like. A member registration master 2e, a game data file 2f, a point master 2g and the like are constructed in the HDD 2d.

The CPU 2a executes a program stored in the ROM 2b so as to perform the data exchange among the portable terminals 1, an input device 3 and an output device 4 for temporarily storing predetermined data in the RAM 2c. Then, the CPU 2a executes predetermined processing by reference to data temporarily stored in the RAM 2c and the data stored in the member master 2e, the game data file 2f and the point master 2g of the HDD 2d.

Here, the game server 2 of the first embodiment gives points as monthly additional bonus points to the member who plays a predetermined game of the game site by gaining access to the game site from the portable terminal 1 via the Internet. Here, the points are exchangeable with a predetermined commodity or a predetermined service (for example, clock application, call reception image and call reception sound of the portable terminal or the like). In this case, the game server 2 gives the player the monthly additional bonus points which are increased corresponding to a length of a contract period of the member.

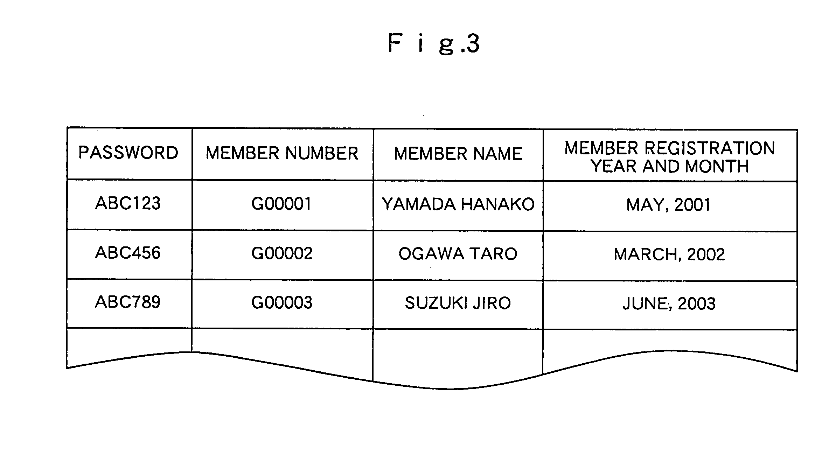

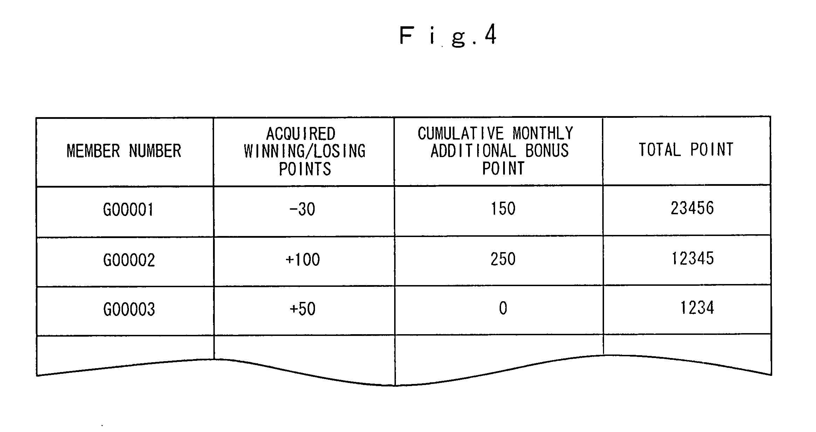

Accordingly, in the member master 2e, data on items shown in Fig. 3, that is, data on passwords, member numbers, member names, member registration dates are stored in such a manner that the data are updated every time that the registration processing of a new member is performed. Further, in the point master 2g, as shown in Fig. 4, respective data on winning/losing-based acquired points, cumulative monthly additional bonus points and the total points are updated and stored at any time in a state that the data are related to these data with the member numbers.

The winning/losing-based acquired points are points calculated based on the winning points and the losing points which the member has gained or lost corresponding to the winning and the losing of the games. Further, the cumulative monthly additional bonus points are points obtained by cumulating the monthly additional bonus points to be predetermined to the member. The cumulative monthly additional bonus points are automatically updated by adding the monthly additional bonus points at the beginning of every month.

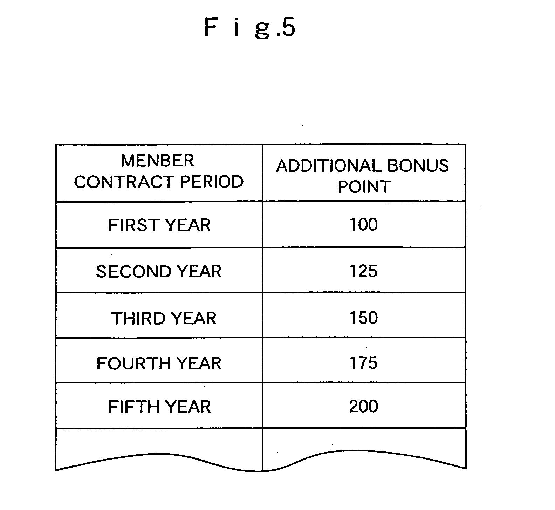

In this case, the monthly additional bonus points are determined in such a manner that the contract period of the member is obtained by reference to the member registration data in the member master 2e and the monthly additional bonus points corresponding to the member contract period are determined by reference to an additional bonus point table (see Fig. 5). Here, although the additional bonus point table is stored in the ROM 2b, the additional bonus point table may be stored in the RAM 2c to enable the rewriting of contents thereof.

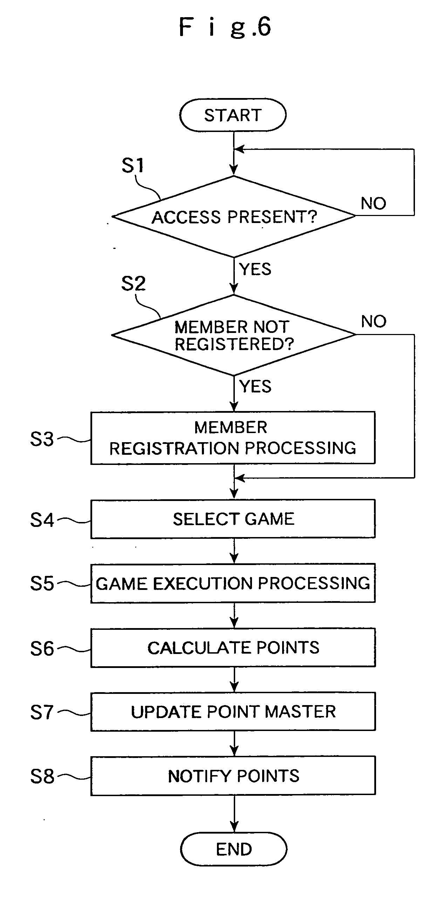

Here, in the game server 2 of the first embodiment, various processing are executed in accordance with a flowchart show in Fig. 6. First of all, in step S1, the determination whether an access from the portable terminal 1 to the game server 2 on the game site is made or not is repeated until the determination "YES" is made due to the inputting of the password.

When the determination result of the step S1 is "YES", in succeeding step S2, it is determined whether the player who is trying to gain access to the game site from the portable terminal 1 is already registered or not as a member. This determination is made based on whether the member number corresponding to the password which the player of the game inputs using the top screen displayed on the portable terminal 1 is present or not. Here, the member master 2e is referenced.

When the determination result is "YES" and it is determined that the player is not yet registered as the member, the member registration processing is executed in the next step S3. In this processing, on the top screen displayed on the portable terminal 1, the player is requested to input the respective data items of the member master 2e shown in Fig. 3. Then, when the respective data items are inputted from the portable terminal 1, the data on the items are stored in the member master 2e.

On the other hand, when the determination result is "NO" and it is determined that the player of the game is the registered member, the processing jumps to step S4 which comes after step S3. In step S4, the processing to allow the registered member select the game is executed. In this processing, the player is requested to select the game which he or she plays on the top screen displayed on the portable terminal 1. As kinds of games, mahjong, slot machine, pachinko, porker and the like are prepared.

When the member selects the game which he or she plays from the top screen on the portable terminal 1 in step S4, in the next step S5, the selected game is downloaded from the game data file 2f and is displayed on the screen of the portable terminal 1. Then, the member starts the game displayed on the screen of the portable terminal 1.

When the game is finished, in the next step S6, the addition/reduction calculation of points corresponding to the winning and losing of the game is executed and the calculated winning/losing points are added to the winning/losing-based acquired points and the total points in the point master 2g respectively. Further, the cumulative monthly additional bonus points corresponding to the member number which are stored in the point master 2g are retrieved and the retrieved cumulative monthly additional bonus points are added to the total point.

In the next step S7, the cumulative winning/losing-based acquired points, the cumulative monthly additional bonus points and the total points in the point master 2g are updated. Here, since the cumulative monthly additional bonus points are predetermined to the member in a state that the cumulative monthly additional bonus points are added to the total points, the cumulative monthly additional bonus points are updated with the balance of 0.

In step S8, the winning/losing-based acquired points corresponding to the winning or the losing of the game of thistime,the updated winning/losing-based acquired points, the cumulative monthly additional bonus points and the updated total points are notified on the screen of the portable terminal 1.

Here, in the points calculation of the step S6, the cumulative monthly additional bonus points which are added to the total points are points which are obtained by cumulating the monthly additional bonus points to be added at the beginning of every month, wherein when the member gains access to the game server 2 every month, the cumulative monthly additional bonus points become the monthly additional bonus points corresponding to one month. Further, this monthly additional bonus points corresponding to one month are, as indicated in the additional bonus point table shown in Fig. 5, increased corresponding to the length of the member contract period, for example, 100 points for the first year, 125 points for the second year, 150 points for third year ... .

In this manner, in the game providing system having the game server 2 according to the first embodiment, since the monthly additional bonus points predetermined to the member at the beginning of every month is increased corresponding to the length of the contract period of the member, the longer the contract period of the member, the more the member expects that more monthly additional bonus points will be predetermined to the member every month whereby the tendency that the member renews the contact period is increased. Accordingly, it is possible to expect the prolongation or the extension of the contract period of the member.

The present invention is not limited to the above-mentioned first embodiment. For example, the numerical values of the additional bonus points indicated on the additional bonus points table shown in Fig. 5 can be changed to suitable values. Further, not only can the additional bonus points be predetermined on a one-month basis, but also on a two-month basis, on a three-month basis or on a four-month basis.

### [Second Embodiment]

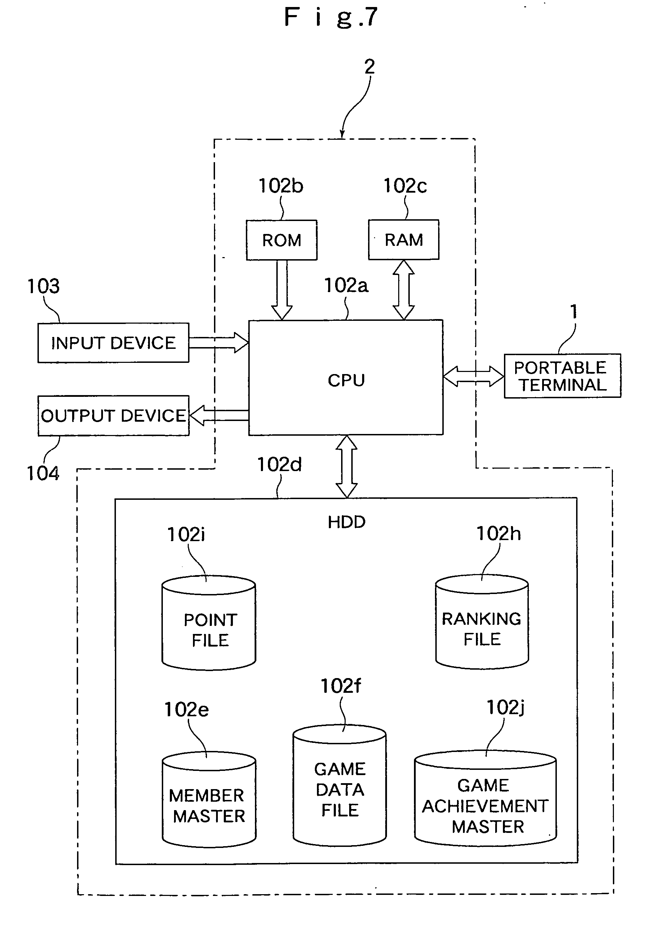

The second embodiment of the game providing system and the game server of the present invention is explained in conjunction with drawings. In the referenced drawings, Fig. 1 is also the schematic view of the game providing system according to the second embodiment and Fig. 7 is a block diagram showing the constitution of the game server shown in Fig. 1.

The game providing system according to the second embodiment also includes, as shown in Fig. 1, portable terminals 1 such as i-mode (registered trademark) mobile phones and a game server 2 to which the portable terminals 1 are connected via the Internet. The game server 2 includes, as shown in Fig. 7, a CPU (Central Processing Unit) 102a, a ROM (Read Only Memory) 102b, a RAM (Random Access Memory) 102c, an HDD (Hard Disk) 102d and the like. A member registration master 102e, a game data file 102f, a game achievement master 102j, a ranking file 102h, a point file 102i and the like are constructed in the HDD 102d.

The CPU 102a executes a program stored in the ROM 102b so as to perform the data exchange among the portable terminals 1, an input device 103 and an output device 104 for temporarily storing predetermined data in the RAM 102c. Then, the CPU 102a executes predetermined processing by reference to data temporarily stored in the RAM 102c and the data stored in the member master 102e, the game data file 102f, the game achievement master 102j, the ranking file 102h and the point file 102i of the HDD 102d.

Here, the game server 102 of the second embodiment gives points as ranking points to the member who plays a predetermined game of a game site by gaining access to the game site from the portable terminal 1 via the Internet. Here, the points are exchangeable with a predetermined commodity or a predetermined service (for example, clock application, call reception image and call reception sound of the portable terminal or the like). In this case, the game server 2 gives the player every month the ranking points which are increased corresponding to a rank among members based on the acquired game achievement of the member who plays a specific game for one month, for example.

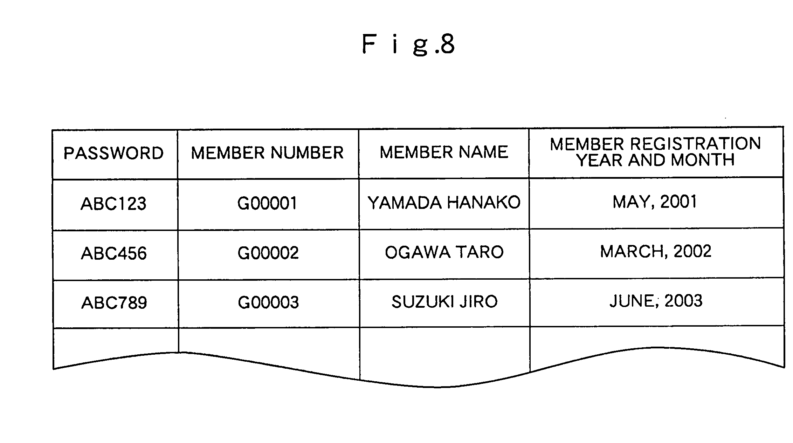

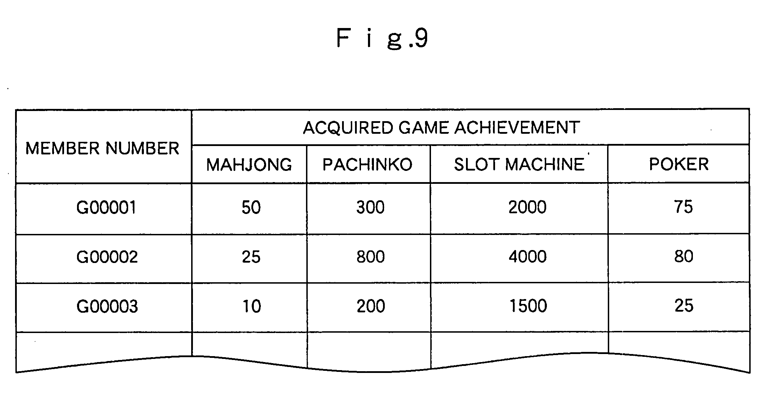

Accordingly, in the member master 102e, data on items shown in Fig. 8, that is, data on passwords, member numbers, member names, member registration dates are stored in such a manner that the data are updated every time the registration processing of a new member is performed. Further, in the game achievement master 102j, as shown in Fig. 9, respective data on the acquired game achievement for each game of "mahjong", "pachinko", "slot machine" or "poker" is updated and stored at any time in a state that the data are related to these data with the member numbers. Further, the total points to which the ranking points are added are stored in the point file 102i.

Among the respective games, the acquired game achievement of the "mahjong" and "poker" which requires an opponent to play the game is the number of times that the player wins against his or her opponent, while the acquired game achievement of the "pachinko" and "slot machine" which requires no opponent to play is the number of acquired balls or the like.

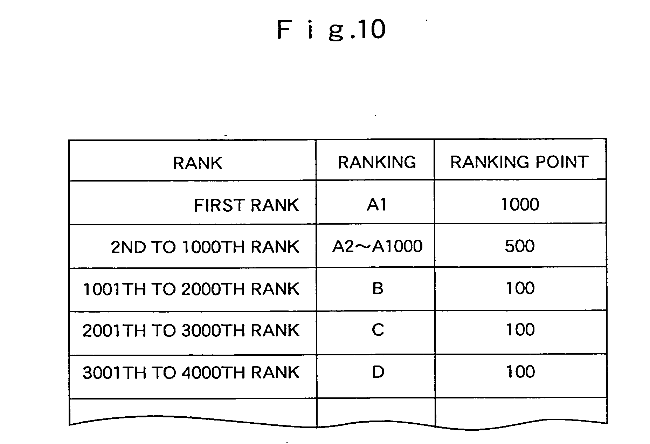

To give the ranking points which are increased corresponding to the rank among the members based on the acquired game achievements to the player, a ranking point table (see Fig. 10) which enables the ranks and the ranking points correspond to each other is stored in the ROM 102b, for example. Here, the ranking point table may be stored in the RAM 102c to enable the rewriting of the contents.

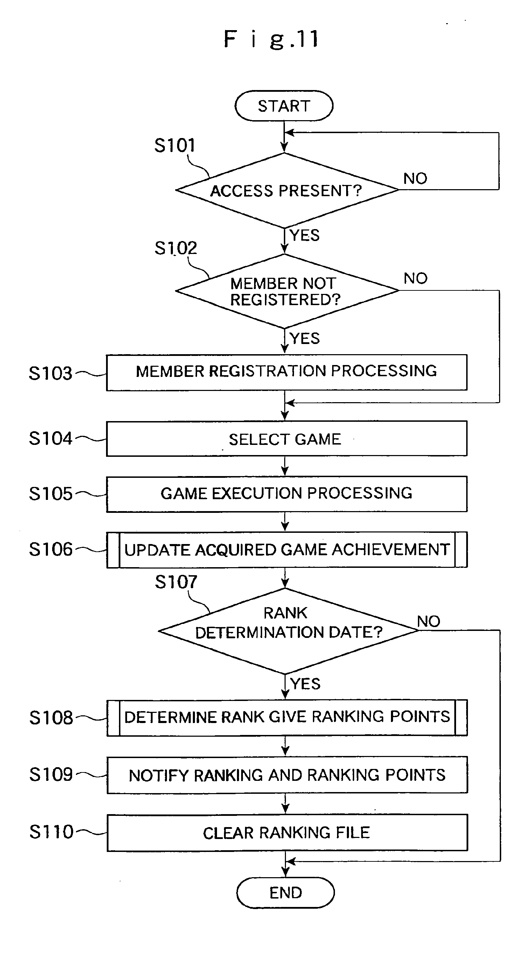

Here, in the game server 2 of the second embodiment, various processing are executed in accordance with a flowchart show in Fig. 11. First of all, in step S101, the determination whether an access from the portable terminal 1 to the game server 2 on the game site is made or not is repeated until the determination "YES" is made due to the inputting of the password.

When the determination result of the step S101 is "YES", in the succeeding step S102, it is determined whether the player who is trying to gain access to the game site from the portable terminal 1 is already registered or not as a member. This determination is made based on whether the member number corresponding to the password which the player of the game inputs using the top screen displayed on the portable terminal 1 is present or not. Here, the member master 102e is referenced.

When the determination result is "YES" and it is determined that the player is not yet registered as a member, the member registration processing is executed in the next step S103. In this processing, on the top screen displayed on the portable terminal 1, the player is requested to input the respective data items of the member master 102e shown in Fig. 8. Then, when the respective data items are inputted from the portable terminal 1, the data on the items are stored in the member master 102e.

On the other hand, when the determination result is "NO" in step S102 and it is determined that the player of the game is the registered member, the processing jumps to step S104 which comes after step S103. In step S104, the processing to allow the registered member select the game is executed. In this processing, the player is requested to select the game which he or she plays on the top screen displayed on the portable terminal 1. As kinds of games, mahjong, pachinko, slot machine, porker and the like are prepared.

When the member selects "mahjong" as the game which he or she plays from the top screen on the portable terminal 1 in step S104, in the next step S105, the selected mahjong game is downloaded from the game data file 102f and is displayed on the screen of the portable terminal 1. Then, the member selects a computer opponent character of the mahjong game displayed on the screen of the portable terminal 1 and starts the game.

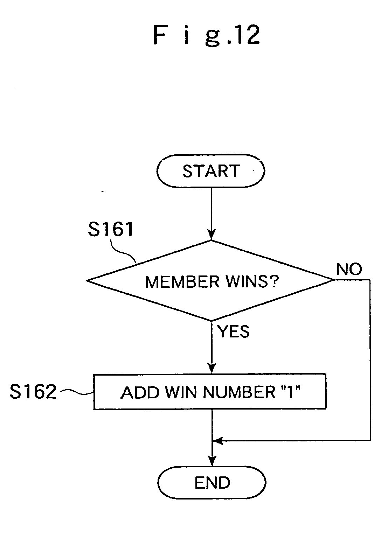

When the mahjong game is finished, in the next step S106, the acquired game achievements are updated corresponding to the winning/losing of the mahjong game. That is, as shown in a subroutine of Fig. 12, first of all, it is determined whether the member wins the mahjong game against the opponent (S161). When the result of the determination is "YES", the number of wins is set to "1" and the acquired game achievements in a column "mahjong" corresponding to the member number of the game achievement master 102j (see Fig. 9) are updated by being added with "1" (S162), while when the result of the determination is "NO", the subroutine of Fig. 12 is finishedwithout performing the processing in step S162.

When the subroutine of Fig. 12 is finished, the processing advances to step S107 of the flowchart shown in Fig. 11 and it is determined whether a data of the day on which the acquired game achievements are updated is a ranking determining date or not. For example, it is judged whether the game-playing date corresponds to the last day of every month and a preset ranking decision date or not.

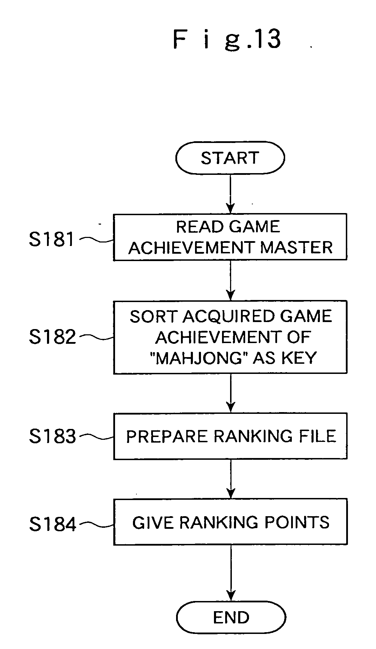

When the result of the determination in step S107 is "NO", the processing of the flowchart shown in Fig. 11 is finished, while when the result of the determination in step S107 is "YES", the ranks among the members are determined in the next step S108 and the ranking points which are increased corresponding to the rank are predetermined to the member. The processing of step S108 is executed in accordance with a subroutine shown in Fig. 13.

In the subroutine shown in Fig. 13, first of all, the content of the game achievement master 102j shown in Fig. 9 is read out (S181) and the content of the game achievement master 102j is sequentially sorted in the descending order using the acquired game achievements of the "mahjong" as a key, for example (S182). Subsequently, the ranks among the members are determined based on the content of the sorted game achievement master 102j and the ranking file 102h (see Fig. 7) corresponding to the ranking is prepared (S183).

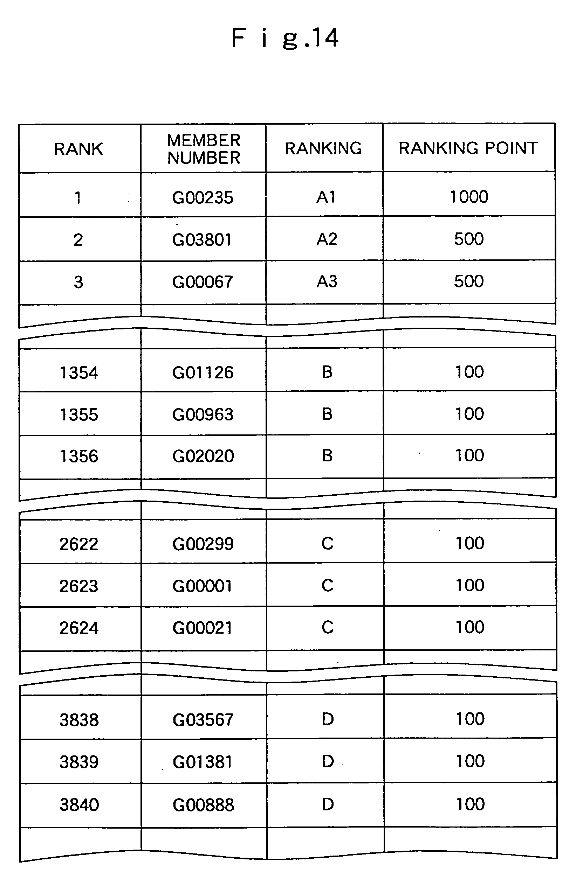

In the ranking file 102h, as shown in Fig. 14, the member numbers, the ranking and the ranking points are described. With respect to the ranking and the ranking points, the ranking and the ranking points corresponding to the ranks are described by reference to the ranking point table (see Fig. 10).

In the next step S184, the ranking points described in the ranking file 102h are updated by being added to the total points stored in the point file 102i (see Fig. 7) and, thereafter, the ranking points are predetermined to the member.

When the subroutine shown in Fig. 13 is completed, the processing advances to step S109 of the flowchart shown in Fig. 11. In step S109, the ranking corresponding to the member number and the ranking point stored in the ranking file 102h (see Fig. 14) are read out and, at the same time, the total points of the point file 102i are read out and these ranking, ranking points and total points are presented on the screen of the portable terminal 1. Thereafter, the ranking file 102h is cleared and the processing of the flow chart shown in Fig. 11 is finished.

Here, in the determination of ranks and the processing for giving ranking points in step S108 shown in Fig. 11, the ranking points which are predetermined are, as shown in the ranking point table shown in Fig. 10, are increased corresponding to the elevation of ranks among the members such that 1000 points are predetermined to the first rank, 500 points are predetermined to the second rank to the 1000th rank, and 100 points are predetermined to the 1001th rank and the ranks lower than the 1001th rank.

In this manner, in the game providing system including the game server 2 of the second embodiment, for example, the acquired game achievements of the members who play the mahjong game are summed up every month, the ranks among the members based on the acquired game achievements are notified as ranking and, at the same time, the ranking points which are increased corresponding to the ranks among the members are predetermined to the members. Accordingly, the competitive spirit of each member against other members is fanned and, at the same time, the higher the rank of the member, the more often he or she visits the game site expecting that more ranking points will be predetermined to the member whereby an access ratio to the game site is enhanced.

The present invention is not limited to the above-mentioned second embodiment. For example, the ranking and the ranking points shown in the ranking point table shown in Fig. 10 can be suitably changed.

## Claims

1. A game providing system comprising:
a portable terminal; and
a game server connected with the portable terminal via the Internet, the game server capable of giving points which are exchangeable with a predetermined commodity or service to a registered member who gains access to the game server to play a game on a game site from the portable terminal via the Internet in accordance with attributes of the member.

2. A game providing system according to claim 1, wherein the attribute is a contract period length of the member.

3. A game providing system according to claim 1, wherein the attribute is the member's achievement in the game.

4. A game server capable of giving points which are exchangeable with a predetermined commodity or service to a registered member who gains access to the game server to play a game on a game site from a portable terminal via the Internet in accordance with attributes of the member.

5. A game server according to claim 4, wherein the attribute is a contract period length of the member.

6. A game server according to claim 4, wherein the attribute is member's achievement in the game.
